# EUROPEAN PATENT SPECIFICATION

(11) **EP 1 363 472 B1**
(45) Date of publication and mention of the grant of the patent: **30.07.2008**
(21) Application number: 03101306.3
(22) Date of filing: 12.05.2003
(51) Int. Cl.: H04Q 7/38

(54) **Handover in a telecommunications network**
Weiterreichen in einem Telekommunikationsnetz
Transfert d'appel dans un réseau de télécommunication

(30) Priority: 14.05.2002 FI 20020908
(43) Date of publication of application: 19.11.2003
(73) Proprietor: TeliaSonera Finland Oyj, 00510 Helsinki (FI)
(72) Inventor: Julkunen, Mika, 01820 Klaukkala (FI); Ruusunen, Kimmo, 04250 Kerava (FI); Heikkilä, Tommi K., 00200 Helsinki (FI)
(74) Representative: Äkräs, Tapio Juhani

(56) References cited:
- US-A1- 2002 051 432

## Description

### BACKGROUND OF THE INVENTION

The invention relates to telecommunications technology and particularly to inter-operator handover.

Handover can be defined as a function for changing traffic channels used by a terminal during an ongoing connection, for instance a call, in such a way that the ongoing connection continues. In handover, the connection moves from a first radio channel to a second radio channel, and the decision about the handover is usually made by a telecommunications network.

Both for traffic-related reasons and on the basis of measurement results, handovers can be divided into four groups: intra-cell handover to another traffic channel of the same cell, intra-BSC handover between cells under the same BSC area (BSC, Base Station Centre), intra-MSC handover when a terminal moves from one cell to another, which cells belong to different BSC areas (MSC, Mobile Station Switching Centre), and inter-MSC handover when a terminal moves from one MSC area to another in the working range of a GSM network (GSM, Global System for Mobile Communications) of a single operator. During an MSC handover of a packet-switched telecommunications network, the SGSN (Serving GPRS Support Node; GPRS General Packet Radio Service) that changes is the one under which the terminal is.

Handover can also be performed between operators. Inter-operator handover that would enable the moving between networks of different operators without the connection and the service being interrupted is, however, difficult to implement in environments where network operators allow their subscribers national roaming between operators. Usually, when roaming takes place, the network (PLMN, Public Land Mobile Network) is reselected when the connection to the home network (HPLMN, Home PLMN) has been interrupted. Thus, also the service used, for example speech or a GPRS data transmission connection (GPRS, General Packet Radio System) is interrupted, which is unpleasant for the final user.

Roaming also expresses selection of a network (PLMN) when the terminal is switched on. Roaming can also express reselection of a network when the connection to the serving network is interrupted.

The 3GPP standard (3GPP, 3^{rd} Generation Partnership Project) enables inter-operator handover. This handover is based on the capability of a terminal to measure networks of more than one operator simultaneously. This feature requires, however, changes in both the terminal and the network. If handover is to function in both directions between the networks, both operators must acquire this feature. Even despite this, handover does not function for all subscribers, because all terminals do not support this functionality. In the document US 2002/0051432 a method and a system for making a handoff between a CDMA and a mobile communication system is described. In it the handoff is performed using a gateway, wherein one frequency is used by a first cell and a first sector of the gateway and a second frequency is used by a second cell and a second sector of the gateway.

A problem with the above-described arrangement is, from the viewpoint of network planning, difficult and slow parameterization of the functionality required for the inter-operator handover. A further problem with the above-described arrangement is that it is complex as it requires changes in the terminal and even despite this, handover does not function for all subscribers, because all terminals do not support the functionality.

### BRIEF DESCRIPTION OF THE INVENTION

An object of the invention is thus to provide a method and an apparatus implementing the method in such a way that the above problems can be alleviated. The object of the invention is achieved with a method and system that are characterized in what is stated in the independent claims. Preferred embodiments of the invention are described in the dependent claims.

The invention is based on the idea that a telecommunications network comprising first cells that transmit a first network identifier of the telecommunications network further comprises at least one access cell that transmits a second network identifier of a second telecommunications network, and that the telecommunications network is arranged to move, by means of forced handover, a terminal that moves from said second telecommunications network to the cell transmitting said second network identifier from the cell transmitting the second network identifier to one of the cells transmitting said first network identifier.

An advantage of the method and system according to the invention is quick handover, for instance between networks of different operators.

### BRIEF DESCRIPTION OF THE FIGURES

The invention will now be described in greater detail in connection with preferred embodiments, with reference to the attached figures, of which
Figure 1 shows the operating ranges of two different operators; and
Figure 2 shows inter-operator handover in detail.

### DETAILED DESCRIPTION OF THE INVENTION

In the present document, handover (HO) refers to both handover taking place for a circuit-switched service and cell reselection intended for a packet-switched service for a GSM voice service, circuit-switched GSM data, a GPRS service, a UMTS voice service and a circuit-switched and a packet-switched UMTS service. In the present document, the term 'handover' refers to both handover of a circuit-switched voice service and cell reselection of a packet-switched service.

The invention and its preferred embodiments function in any mobile station system where the operators can be separated by means of network identifiers (PLMN code), for instance by means of cell-specific network identifiers. Thus, the invention and its preferred embodiments are not restricted to the GSM or UMTS systems.

Further, in the present document, inter-operator handover refers to handover taking place between the networks of two operators at a time. This handover allows network reselection without the connection being interrupted. Handover between network identifiers, in turn, refers to handover which can be used for different network identifiers of a single operator or, for instance, between networks of two different operators. This functionality can require an EPLMN (Equivalent PLMN) support or the like, in which case the mobile station is capable of measuring cells of different networks.

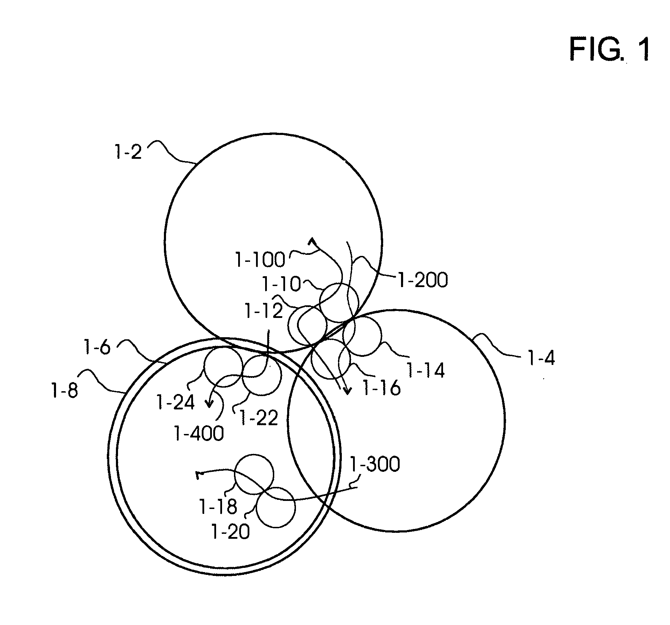

Figure 1 shows the basic idea and application object of the invention. Reference numerals 1-2 (operator A) and 1-4 (operator B) indicate networks of two different operators A and B or a part thereof, i.e. the coverage area, for instance in a sparsely inhabited rural area.

In urban areas, both operators can establish networks of their own. In Figure 1, the urban area network of operator A is indicated with reference numeral 1-8, the urban area network of operator B being denoted with reference numeral 1-6. In areas where the operators' network coverage areas are, for the most part, overlapping, handover between the networks 1-6 and 1-8 of the operators A and B is not necessarily needed.

The deployment responsibilities of coverage areas in rural areas can be divided between different operators in such a way, for example, that operator A forms a part of the rural coverage area 1-2 and operator B forms another part of the rural coverage area 1-4. Handover can be performed between regional coverages of these networks and operators in such a way, for example, that operator A's subscriber can move to operator B's network and/or vice versa. Likewise, if operator B's subscriber, for example, is in operator A's rural network, it is possible for operator B's subscriber to move seamlessly from there to the urban network of his own operator B.

Reference numerals 1-10 ... 1-24 indicate subareas, for instance cells, in the coverage areas 1-2 ... 1-8 of operators A and B. Reference numeral 1-10 indicates a subarea of the whole area 1-2 of operator A, being used by operator A itself; reference numeral 1-12 indicates a subarea of the whole area 1-2 of operator A, being used by operator B; reference numeral 1-14 indicates a subarea of the whole area 1-4 of operator B, being used by operator A, and reference numeral 1-16 indicates a subarea of the whole area 1-4 of operator B, being used by operator B itself. Operator A can have leased or purchased the subarea 1-14 from operator B. In the same way, operator B can have, for instance, leased or purchased a subarea 1-12 from operator A.

Reference numeral 1-18 denotes a subarea of the whole area 1-8 of operator A, being used by operator A itself; reference numeral 1-20 denotes a subarea of the whole area 1-8 of operator A, being used by operator B; reference numeral 1-22 denotes a subarea of the whole area 1-6 of operator B, being used by operator A; and reference numeral 1-24 denotes a subarea of the whole area 1-6 of operator B, being used by operator B.

Thus, in inter-operator handover 1-100, for instance from operator B's area 1-4 to operator A's area 1-2, a terminal can move from operator B's own subarea 1-16 to the subarea 1-12 leased by operator B, and further to operator A's own subarea 1-10.

Correspondingly, in handover 1-200 from operator A's area 1-2 to operator B's area 1-4, a terminal can move from operator A's own subarea 1-10 to the subarea 1-14 leased by operator A, and further to operator B's own subarea 1-16.

In handover 1-300 from operator B's area 1-4 to operator A's area 1-8, a terminal can move to the subarea 1-20 leased by operator B, and further to operator A's subarea 1-18.

In handover 1-400 from operator A's area 1-2 to operator B's area 1-6, a terminal can move to the subarea 1-22 leased by operator A, and further to operator B's subarea 1-24.

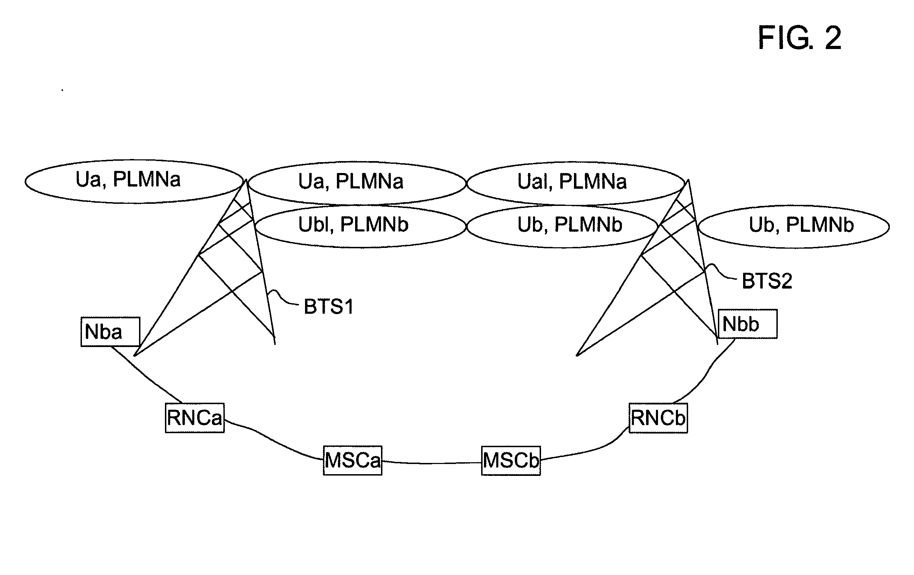

Figure 2 shows in greater detail in which way the handover at network borders can be implemented. Operator B owns a base transceiver station BTS2, in which it uses its own frequency and PLMN code, i.e. network identifier, in the UMTS network. This is expressed by means of a cell Ub PLMNb. In addition, the operator can lease from operator A's base transceiver station a UMTS cell, where it can also use its own frequency and PLMN code. This is expressed by a cell Ubl PLMNb. This cell can also be called an access cell. Handover between these UMTS cells can take place as handover between the operators' switching centres MSCa and MSCb, based on measurements of the terminal.

PLMN denotes the operator's network identifier, which can be either the same or different for GSM and UMTS networks, for example.

When being in the cell Ubl, PLMNb, the subscriber cannot move to operator A's network by means of handover according to the prior art, because he is only capable of measuring cells under the network identifier code of his own operator B. Since operator A's and operator B's cells Ua, PLMNa and Ubl, PLMNb are in the same base transceiver station BTS1 and connected to the same RNC element RNCa (RNC, Radio Network Controller), forced handover can be performed. In such a case, RNCa commands the subscriber to move from the cell Ubl, PLMNb to the cell Ua, PLMNa without the terminal having to perform measurements. After this handover, the subscriber can move seamlessly in operator A's network area. The application thus allows the terminal to move between different operators' networks, for instance GSM and UMTS networks (UMTS, Universal Mobile Telecommunications System) without a need for the terminal to be capable of measuring several networks simultaneously. Thus, the handover according to the invention and its preferred embodiments does not require additional functionality of the terminal.

Movement between the UMTS and GSM networks of a single operator is based on handover functionality between the systems of the standard. This also enables the access of the UMTS subscribers of the first operator to the GSM network of the second operator after an inter-operator handover according to the invention and its preferred embodiments has been performed to the UMTS network of the second operator. Operator A can lease a cell from operator B's base transceiver station and use its own frequency and network identifier code in it. Correspondingly, operator B can lease a cell from operator A's base transceiver station and use its own frequency and network identifier code in it. Thus, the handover functions in both directions for the subscribers of both networks.

In packet-switched data transfer, cell selection takes place according to the same principles as handover. Thus, however, network-aided cell selection has to be used between cells belonging to different operators, and the terminal does not decide on the cell selection by itself.

In what is called an idle state, in which there is no service, for instance a call or a PDP context (PDP, Packet Data Protocol), connected, no actual cell selection takes place between operators, but one moves from one network to another with ordinary roaming functionality.

According to an alternative embodiment of the invention, it is possible to use what is called inter-PLMN handover, which would enable handover between both the operator's own network identifiers and the network identifiers of two different operators. The functioning of the solution requires of the telecommunications network and terminal what is called an EPLM functionality support defined by the 3GPP. The EPLMN (Equivalent PLMN) allows the networks of two different operators to be, so to say, equivalent to each other with regard to the PLMN and cell reselection. Owing to the EPLMN functionality, all network identifiers that are on the EPLMN list and that have been supplied to the terminal by the network can be processed equally by the terminal. Thus, the switching centres and serving GPRS support nodes of both networks are capable of controlling the handover and the cell reselection process.

In addition, both operators must have inter-operator handover functionality available, and at least one of the operators must inform about an access cell reserved from another cell on its adjacent-cell list, so that the terminal can measure this cell. When operators' network identifiers are processed equivalently, inter-operator handover becomes possible for circuit-switched services and cell reselection becomes possible for packet-switched services without the connection being interrupted.

The invention and its preferred embodiments enable inter-operator handover in the above manner without device-manufacturer-specific inter-operator handover functionality and the standardized EPLMN functionality. Further, it can be mentioned as a particular advantage that the invention and its preferred embodiments do not require support of the terminal.

In order for them to function, the invention and its preferred embodiments require that the device manufacturers update the BSC/RNC software to support the use of a cell-specific network identifier code, in other words the PLMN code must be a cell-specific parameter. The network identifier code can be, depending on the device supplier, a BSC/RNC-specific or cell-specific parameter, for example. In addition, the solution requires that the network support the network-aided cell selection.

An advantage of the invention and its preferred embodiments is simple inter-operator handover, which requires fewer manufacturer-specific modifications in network components and some future network functionalities, such as EPLMN (Equivalent PLMN), depending on standardization. The invention and preferred embodiments require less of the radio network design and of the needed network properties supported by device manufacturers. The invention requires less network maintenance and configuration compared with the method according to the 3GPP standard and is thus less expensive. Further, the invention and its preferred embodiments are simple and advantageous to implement and bring into use, for instance due to the simple parameterization of the radio network.

In addition, the invention can be brought into use irrespective of the terminal manufactures. Furthermore, it is easier and quicker for device manufacturers to update the BSC/RNC software with a new cell-specific PLMN parameter than to implement complex inter-PLMN handover functionality.

The invention is not restricted by the limited size of the adjacent-cell list either.

The invention and its preferred embodiments implement handover particularly advantageously between the GSM and UMTS networks and between different UMTS networks.

It will be obvious to a person skilled in the art that as the technology advances, the basic idea of the invention can be implemented in a plurality of ways. The invention and its embodiments are thus not limited to the above-described examples but can vary within the scope of the claims.

## Claims

1. A telecommunications network comprising first cells (1-10, 1-12, 1-14, 1-16, 1-18, 1-20, 1-22, 1-24) that are arranged to transmit a first network identifier, **characterized in that** the telecommunications network further comprises at least one access cell (1-12, 1-14, 1-20, 1-22) that is arranged to transmit a second network identifier of a second telecommunications network, and that the telecommunications network is arranged to move, by means of a forced handover, a terminal that moves (1-100, 1-200, 1-300, 1-400) from said second telecommunications network to said cell (1-10, 1-12, 1-14, 1-16, 1-18, 1-20, 1-22, 1-24) arranged to transmit the second network identifier from the cell (1-10, 1-12, 1-14, 1-16, 1-18, 1-20, 1-22, 1-24) arranged to transmit the second network identifier to one cell (1-10, 1-12, 1-14, 1-16, 1-18, 1-20, 1-22, 1-24) arranged to transmit said first network identifier.

2. A telecommunications network according to claim 1, **characterized in that** the cells (1-10, 1-12, 1-14, 1-16, 1-18, 1-20, 1-22, 1-24) arranged to transmit the first and the second network identifier are different cells (1-10, 1-12, 1-14, 1-16, 1-18, 1-20, 1-22, 1-24) of a single base transceiver station, BTS1, BTS2.

3. A telecommunications network according to claim 1, **characterized in that** the cell arranged to transmit the first network identifier is a cell of the first base transceiver station (BTS1, BTS2) and the cell arranged to transmit the second network identifier is a cell of the second base transceiver station (BTS1, BTS2).

4. A telecommunications network according to claim 1, 2 or 3, **characterized in that** the cell (1-10, 1-12, 1-14, 1-16, 1-18, 1-20, 1-22, 1-24) arranged to transmit the first network identifier and the second network identifier are in two substantially different frequency ranges.

5. A telecommunications network according to claim 1, 2 or 3, **characterized in that** the cell (1-10, 1-12, 1-14, 1-16, 1-18, 1-20, 1-22, 1-24) arranged to transmit the first network identifier and the cell (1-10, 1-12, 1-14, 1-16, 1-18, 1-20, 1-22, 1-24) arranged to transmit the second network identifier are in substantially the same frequency ranges.

6. A telecommunication network according to any one the preceding claims 1 to 5, **characterized by** the cells (1-10, 1-12, 1-14, 1-16, 1-18, 1-20, 1-22, 1-24) arranged to transmit the first and the second network identifier being cells (1-10, 1-12, 1-14, 1-16, 1-18, 1-20, 1-22, 1-24) of circuit and/or packet-switched telecommunications networks.

7. A radio network controller in a telecommunications network, comprising first cells (1-10, 1-12, 1-14, 1-16, 1-18, 1-20, 1-22, 1-24) that are arranged to transmit a first network identifier, **characterized in that** the telecommunications network further comprises at least one access cell (1-12, 1-14, 1-20, 1-22) that is arranged to transmit a second network identifier of a second telecommunications network, and that the radio network controller is arranged to move, by means of a forced handover, a terminal from said second telecommunications network to said cell (1-10, 1-12, 1-14, 1-16, 1-18, 1-20, 1-22, 1-24) arranged to transmit the second network identifier from the cell (1-10, 1-12, 1-14, 1-16, 1-18, 1-20, 1-22, 1-24) arranged to transmit the second network identifier to one cell (1-10, 1-12, 1-14, 1-16, 1-18, 1-20, 1-22, 1-24) arranged to transmit said first network identifier.

8. A method of performing handover, **characterized by**
- cells (1-10, 1-12, 1-14, 1-16, 1-18, 1-20, 1-22, 1-24) of a first telecommunications network transmitting a first network identifier PLMNa;
- first cells (1-10, 1-12, 1-14, 1-16, 1-18, 1-20, 1-22, 1-24) of a second telecommunications network transmitting a second network identifier PLMNb;
- at least one second cell (1-10, 1-12, 1-14, 1-16, 1-18, 1-20, 1-22, 1-24) of the second telecommunications network transmitting said first network identifier PLMNa;
- the first telecommunications network informing the terminal that said second cell (1-10, 1-12, 1-14, 1-16, 1-18, 1-20, 1-22, 1-24) of the second telecommunications network is an adjacent cell (1-10, 1-12, 1-14, 1-16, 1-18, 1-20, 1-22, 1-24) of at least one cell (1-10, 1-12, 1-14, 1-16, 1-18, 1-20, 1-22, 1-24) of the first telecommunications network;
- the terminal that is in the first network selecting said second cell (1-10, 1-12, 1-14, 1-16, 1-18, 1-20, 1-22, 1-24) in said second network by using the cell (1-10, 1-12, 1-14, 1-16, 1-18, 1-20, 1-22, 1-24) selection method of the first network;
- the second telecommunications network detecting that the terminal is connected to said second cell (1-10, 1-12, 1-14, 1-16, 1-18, 1-20, 1-22, 1-24); and
- the second telecommunications network performing for the terminal forced handover from said second cell (1-10, 1-12, 1-14, 1-16, 1-18, 1-20, 1-22, 1-24) to one of said first cells (1-10, 1-12, 1-14, 1-16, 1-18, 1-20, 1-22, 1-24).

## Patentansprüche

1. Telekommunikationsnetz, das erste Zellen (1-10, 1-12, 1-14, 1-16, 1-18, 1-20, 1-22, 1-24) aufweist, die angeordnet sind, um einen ersten Netzidentifikator zu senden, ***dadurch gekennzeichnet, dass*** das Telekommunikationsnetz weiterhin mindestens eine Zugangszelle (1-12, 1-14, 1-20, 1-22) aufweist, die angeordnet ist, um einen zweiten Netzidentifikator eines zweiten Telekommunikationsnetzes zu senden, und das Telekommunikationsnetz angeordnet ist, um durch eine erzwungene Übergabe ein sich bewegendes Endgerät (1-100, 1-200, 1-300, 1-400) von dem zweiten Telekommunikationsnetz zu der Zelle (1-10, 1-12, 1-14, 1-16, 1-18, 1-20, 1-22, 1-24) zu bewegen, die angeordnet ist, um den zweiten Netzidentifikator von der Zelle (1-10, 1-12, 1-14, 1-16, 1-18, 1-20, 1-22, 1-24) zu senden, die angeordnet ist, um den zweiten Netzidentifikator zu einer Zelle (1-10, 1-12, 1-14, 1-16, 1-18, 1-20, 1-22, 1-24) zu senden, die angeordnet ist, um den ersten Netzidentifikator zu senden.

2. Telekommunikationsnetz nach Anspruch 1, ***dadurch gekennzeichnet, dass*** die Zellen (1-10, 1-12, 1-14, 1-16, 1-18, 1-20, 1-22, 1-24), die angeordnet sind, um den ersten und den zweiten Netzidentifikator zu senden, unterschiedliche Zellen (1-10, 1-12, 1-14, 1-16, 1-18, 1-20, 1-22, 1-24) einer einzigen Basis-Sender/Empfängerstation (BTS1, BTS2) sind.

3. Telekommunikationsnetz nach Anspruch 1, ***dadurch gekennzeichnet, dass*** die Zelle, die angeordnet ist, um den ersten Netzidentifikator zu senden, eine Zelle einer ersten Basis-Sender/Empfängerstation (BTS1, BTS2) ist und die Zelle, die angeordnet ist, um den zweiten Netzidentifikator zu senden, eine Zelle einer zweiten Basis-Sender/Empfängerstation (BTS1, BTS2) ist.

4. Telekommunikationsnetz nach Anspruch 1, 2, oder 3, ***dadurch gekennzeichnet, dass** die* Zelle (1-10, 1-12, 1-14, 1-16, 1-18, 1-20, 1-22, 1-24), die angeordnet ist, um den ersten Netzidentifikator und den zweiten Netzidentifikator zu senden, in zwei wesentlich unterschiedlichen Frequenzbereichen ist.

5. Telekommunikationsnetz nach Anspruch 1, 2, oder 3, ***dadurch gekennzeichnet, dass*** die Zelle (1-10, 1-12, 1-14, 1-16, 1-18, 1-20, 1-22, 1-24), die angeordnet ist, um den ersten Netzidentifikator zu senden, und die Zelle (1-10, 1-12, 1-14, 1-16, 1-18, 1-20, 1-22, 1-24), die angeordnet ist, um den zweiten Netzidentifikator zu senden, in im Wesentlichen den gleichen Frequenzbereichen sind.

6. Telekommunikationsnetz nach einem der vorhergehenden Ansprüche 1 bis 5, ***dadurch gekennzeichnet, dass*** die Zellen (1-10, 1-12, 1-14, 1-16, 1-18, 1-20, 1-22, 1-24), die angeordnet sind, um den ersten und den zweiten Netzidentifikator zu senden, Zellen (1-10, 1-12, 1-14, 1-16, 1-18, 1-20, 1-22, 1-24) von leitungs- und/oder paketvermittelten Telekommunikationsnetzen sind.

7. Funknetz-Steuereinrichtung in einem Telekommunikationsnetz, das erste Zellen (1-10, 1-12, 1-14, 1-16, 1-18, 1-20, 1-22, 1-24) aufweist, die angeordnet sind, um einen ersten Netzidentifikator zu senden, ***dadurch gekennzeichnet, dass*** das Telekommunikationsnetz weiterhin mindestens eine Zugangszelle (1-12, 1-14, 1-20, 1-22) aufweist, die angeordnet ist, um einen zweiten Netzidentifikator eines zweiten Telekommunikationsnetzes zu senden, und die Funknetz-Steuereinrichtung angeordnet ist, um durch eine erzwungene Übergabe ein Endgerät von dem zweiten Telekommunikationsnetz zu der Zelle (1-10, 1-12, 1-14, 1-16, 1-18, 1-20, 1-22, 1-24) zu bewegen, die angeordnet ist, um den zweiten Netzidentifikator von der Zelle (1-10, 1-12, 1-14, 1-16, 1-18, 1-20, 1-22, 1-24) zu senden, die angeordnet ist, um den zweiten Netzidentifikator zu einer Zelle (1-10, 1-12, 1-14, 1-16, 1-18,1-20, 1-22, 1-24) zu senden, die angeordnet ist, um den ersten Netzidentifikator zu senden.

8. Verfahren zum Durchführen einer Übergabe, **dadurch *gekennzeichnet, dass***
- Zellen (1-10, 1-12, 1-14, 3-16, 1-18, 1-20,1-22,1-24) eines ersten Telekommunikationsnetzes einen ersten Netzidentifikator (PLMNa) senden;
- erste Zellen (1-10, 1-12, 1-14, 1-16, 1-18, 1-20, 1-22, 1-24) eines zweiten Telekommunikationsnetzes einen zweiten Netzidentifikator (PLMNb) senden;
- mindestens eine zweite Zelle (1-10, 1-12, 1-14, 1-16, 1-18, 1-20, 1-22, 1-24) des zweiten Telekommunkationsnetzes den ersten Netzidnetifikator (PLMNa) sendet;
- das erste Telekommunkationsnetz das Endgerät unterrichtet, dass die zweite Zelle (1-10, 1-12, 1-14, 1-16,1-18, 1-20, 1-22, 1-24) des zweiten Telekommunikationsnetzes eine angrenzende Zelle (1-10, 1-12, 1-14, 1-16, 1-18, 1-20, 1-22, 1-24) mindestens einer Zeile (1-10, 1-12, 1-14, 1-16, 1-18, 1-20, 1-22, 1-24) des ersten Telekommunikationsnetzes ist;
- das Endgerät, das in dem ersten Netz ist, die zweite Zelle (1-10, 1-12, 1-14, 1-16, 1-18, 1-20, 1-22, 1-24) in dem zweiten Netz unter Verwendung des Auswahlverfahrens der Zelle (1-10, 1-12, 1-14, 1-16, 1-18, 1-20, 1-22, 1-24) des ersten Netzes auswählt;
- das zweite Telekommunikationsnetz erfasst, dass das Endgerät mit der zweiten Zelle (1-10, 1-12, 1-14, 1-16, 1-18, 1-20, 1-22, 1-24) verbunden ist; und
- das zweite Telekommunikationsnetz für das Endgerät eine erzwungene Übergabe von der zweiten Zelle (1-10, 1-12, 1-14, 1-16, 1-18, 1-20, 1-22, 1-24) zu einer der ersten Zellen (1-10, 1-12, 1-14, 1-16, 1-18, 1-20, 1-22, 1-24) durchführt.

## Revendications

1. Réseau de télécommunications comprenant des premières cellules (1-10, 1-12, 1-14, 1-16, 1-18, 1-20, 1-22, 1-24) qui sont agencées pour transmettre un premier identificateur de réseau, **caractérisé en ce que** le réseau de télécommunications comprend, en outre, au moins une cellule d'accès (1-12, 1-14, 1-20, 1-22) qui est agencée pour transmettre un deuxième identificateur de réseau d'un deuxième réseau de télécommunications, et **en ce que** le réseau de télécommunications est agencé pour transférer, par un transfert de cellule forcé, un terminal qui se déplace (1-100, 1-200, 1-300, 1-400) à partir du dit deuxième réseau de télécommunications à ladite cellule (1-10, 1-12, 1-14, 1-16, 1-18, 1-20, 1-22, 1-24) agencée pour transmettre le deuxième identificateur de réseau à partir de la cellule (1-10, 1-12, 1-14, 1-16, 1-18, 1-20, 1-22, 1-24) agencée pour transmettre le deuxième identificateur de réseau à une cellule (1-10, 1-12, 1-14, 1-16, 1-18, 1-20, 1-22, 1-24) agencée pour transmettre ledit premier identificateur de réseau.

2. Réseau de télécommunications selon la revendication 1, **caractérisé en ce que** les cellules (1-10, 1-12, 1-14, 1-16, 1-18, 1-20, 1-22, 1-24) agencées pour transmettre le premier et le deuxième identificateurs de réseau sont des cellules distinctes (1-10, 1-12, 1-14, 1-16, 1-18, 1-20, 1-22, 1-24) d'une seule station d'émission-réception de base, BTS1, BTS2.

3. Réseau de télécommunications selon la revendication 1, **caractérisé en ce que** la cellule agencée pour transmettre le premier identificateur de réseau est une cellule de la première station d'émission-réception de base (BTS1, BTS2), et la cellule agencée pour transmettre le deuxième identificateur de réseau est une cellule de la deuxième station d'émission-réception de base (BTS1, BTS2).

4. Réseau de télécommunications selon la revendication 1, 2 ou 3, **caractérisé en ce que** les cellules (1-10, 1-12, 1-14, 1-16, 1-18, 1-20, 1-22, 1-24) agencées pour transmettre le premier identificateur de réseau et le deuxième identificateur de réseau sont dans deux plages de fréquence très différentes.

5. Réseau de télécommunications selon la revendication 1, 2 ou 3, **caractérisé en ce que** la cellule (1-10, 1-12, 1-14, 1-16, 1-18, 1-20, 1-22, 1-24) agencée pour transmettre le premier identificateur de réseau, et la cellule (1-10, 1-12, 1-14, 1-16, 1-18, 1-20, 1-22, 1-24) agencée pour transmettre le deuxième identificateur de réseau sont à peu près dans les mêmes plages de fréquence.

6. Réseau de télécommunications selon l'une quelconque des revendications 1 à 5 précédentes, **caractérisé par** les cellules (1-10, 1-12, 1-14, 1-16, 1-18, 1-20, 1-22, 1-24) agencées pour transmettre le premier et le deuxième identificateurs de réseau étant des cellules (1-10, 1-12, 1-14, 1-16, 1-18, 1-20, 1-22, 1-24) de réseaux de télécommunications à commutation de circuits et/ou par paquets.

7. Contrôleur de réseau radio dans un réseau de télécommunications, comprenant des premières cellules (1-10, 1-12, 1-14, 1-16, 1-18, 1-20, 1-22, 1-24) qui sont agencées pour transmettre un premier identificateur de réseau, **caractérisé en ce que** le réseau de télécommunications comprend, en outre, au moins une cellule d'accès (1-12, 1-14, 1-20, 1-22) qui est agencée pour transmettre un deuxième identificateur de réseau d'un deuxième réseau de télécommunications, et **en ce que** le contrôleur de réseau radio est agencé pour transférer, par un transfert de cellule forcé, un terminal dudit deuxième réseau de télécommunications à ladite cellule (1-10, 1-12, 1-14, 1-16, 1-18, 1-20, 1-22, 1-24) agencée pour transmettre le deuxième identificateur de réseau à partir de la cellule (1-10, 1-12, 1-14, 1-16, 1-18, 1-20, 1-22, 1-24) agencée pour transmettre le deuxième identificateur de réseau à une cellule (1-10, 1-12, 1-14, 1-16, 1-18, 1-20, 1-22, 1-24) agencée pour transmettre ledit premier identificateur de réseau.

8. Procédé pour effectuer un transfert de cellule, **caractérisé par** :
- des cellules (1-10, 1-12, 1-14, 1-16, 1-18, 1-20, 1-22, 1-24) d'un premier réseau de télécommunications transmettant un premier identificateur de réseau PLMNa ;
- des premières cellules (1-10, 1-12, 1-14, 1-16, 1-18, 1-20, 1-22, 1-24) d'un deuxième réseau de télécommunications transmettant un deuxième identificateur de réseau PLMNb ;
- au moins une deuxième cellule (1-10, 1-12, 1-14, 1-16, 1-18, 1-20, 1-22, 1-24) du deuxième réseau de télécommunications transmettant ledit premier identificateur de réseau PLMNa ;
- le premier réseau de télécommunications informant le terminal que ladite deuxième cellule (1-10, 1-12, 1-14, 1-16, 1-18, 1-20, 1-22, 1-24) dudit deuxième réseau de télécommunications est une cellule adjacente (1-10, 1-12, 1-14, 1-16, 1-18, 1-20, 1-22, 1-24) à au moins une cellule (1-10, 1-12, 1-14, 1-16, 1-18, 1-20, 1-22, 1-24) du premier réseau de télécommunications ;
- le terminal qui est dans le premier réseau sélectionnant ladite deuxième cellule (1-10, 1-12, 1-14, 1-16, 1-18, 1-20, 1-22, 1-24) dans ledit deuxième réseau, en employant le procédé de sélection de cellule (1-10, 1-12, 1-14, 1-16, 1-18, 1-20, 1-22, 1-24) du premier réseau ;
- le deuxième réseau de télécommunications détectant le fait que le terminal est connecté à ladite deuxième cellule (1-10, 1-12, 1-14, 1-16, 1-18, 1-20, 1-22, 1-24) ; et
- le deuxième réseau de télécommunications effectuant le transfert forcé de cellule du terminal à partir de ladite deuxième cellule (1-10, 1-12, 1-14, 1-16, 1-18, 1-20, 1-22, 1-24) à l'une des dites premières cellules (1-10, 1-12, 1-14, 1-16, 1-18, 1-20, 1-22, 1-24).
